(19) Europäisches Patentamt
European Patent Office
Office européen des brevets

(11) Publication number: **0 025 075**
**B1**

# (12) EUROPEAN PATENT SPECIFICATION

(45) Date of publication of patent specification: **14.03.84**

(51) Int. Cl.$^3$: **C 09 D 11/10, C 08 L 63/02**

(21) Application number: **79301659.3**

(22) Date of filing: **15.08.79**

(54) **Contactless jet printing method, printing ink composition therefor, and articles including containers bearing indicia, printed using said composition.**

(43) Date of publication of application:
**18.03.81 Bulletin 81/11**

(45) Publication of the grant of the patent:
**14.03.84 Bulletin 84/11**

(84) Designated Contracting States:
**BE DE FR GB NL**

(56) References cited:
**FR - A - 2 385 782**
**GB - A - 2 004 904**
**US - A - 4 021 252**

(73) Proprietor: **AMERICAN CAN COMPANY**
**American Lane**
**Greenwich, Connecticut 06830 (US)**

(72) Inventor: **Fell, David A.**
**834 Kay Kourt**
**Neenah, Wisconsin 54956 (US)**

(74) Representative: **Harvey, David Gareth et al,**
**Graham Watt & Co. Riverhead**
**Sevenoaks Kent TN13 2BN (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 025 075 B1**

# Contactless jet printing method, printing ink composition therefor, and articles including containers bearing indicia, printed using said composition

The present invention relates to a contactless jet printing method, an organic chemical mixture constituting an ink jet printing ink composition and articles including bottles, cans and insulated wire bearing indicia printed thereon using the said ink composition.

The prior art appears to be best exemplified by the following patents:

| | | |
|---|---|---|
| Banczak | 4,021,252 | May 3, 1977 |
| Wachtel | 4,024,096 | May 17, 1977 |
| Parkinson | 4,045,397 | Aug. 30, 1977 |
| Hwang | 4,070,322 | Jan. 24, 1978 |
| Parkinson (Germany) | | October 28, 1976 |

Contactless ink jet printing techniques, wherein there is no contact between a form and the article to be printed, although of comparatively recent development in the art of applying decorative and identifying indicia to a substrate, are of increasing importance. In general such techniques impose rigid requirements on the ink compositions. To be suitable for use in such a technique, ink compositions must meet rigid requirements of viscosity and resistivity, solubility, compatibility of components, and wettability of substrate. The ink compositions also must be quick drying and smear resistant yet they must not clog the ink jet nozzle and they must permit rapid clean-up of the machine components with a minimum of effort. In addition to possessing properties demanded by the technique, such compositions must also perform satisfactorily in the particular end use application.

To date, where end use requirements have necessitated abrasion-resistance, resistance to weathering and fade-resistance together with suitability for use on a variety of substrates such as polymeric surfaces, metal surfaces or glass surfaces, jet ink compositions have not been satisfactory since no ink offering such versatility has been available. Jet inks possess numerous advantages over inks applied by conventional techniques such as letter press, gravure, silk-screen or other similar conventional techniques. Such conventional inks are not suitable for jet ink printing because they frequently contain pigments which cause clogging problems in the ink jet equipment. Additionally, conventional inks generally require curing at elevated temperatures for extended periods of time. Moreover, their use in printing polymer coated surfaces, for instance, has not been particularly efficacious primarily because the means of applying such inks have not been conducive to high speed techniques.

Desirably, ink compositions, suitable for use in ink jet printing techniques should exhibit excellent characteristics of fade-resistance, abrasion-resistance, and weathering, especially for use on containers or cans, and should be suitable for application to a variety of surfaces including polymer substrates, metal substrates and glass substrates. Advantageously such ink jet compositions will be suitable for application to polymer coated wires.

The invention aims to provide such ink compositions as well as substrates bearing identifying indicia, derived by application of the the jet ink compositions by means of an ink jet printing technique.

Another more specific aim is to provide indicia-containing polymer coated wires that are suitable for use in aircraft and that, when heated at temperatures of about 300°F (149°C), are characterized by resistance to hydraulic fluids commonly employed.

According to the present invention, there is provided a contactless method of printing indicia on a substrate, characterized by the steps of:

(1) providing an ink composition comprising a solution of (a) an epoxy-phenolic binder resin (b) at least one soluble dye of the basic type or the chromium-complexed azo type and (c) a solvent blend consisting essentially of 25 to 90% of an alcohol having 1 to 3 carbon atoms or a mixture of such alcohols, 5 to 20% water, an aliphatic ketone having 3 to 8 carbon atoms which is present in an amount up to 40% and 0 to 20% of a lower alkylene glycol ether,

(2) applying the said ink composition by means of a jet printing apparatus to a surface of a substrate selected from glass, ceramic, polymer coated wire and coated or uncoated aluminium or steel to form printed incidia thereon.

The invention further provides an ink composition suitable for use in contactless jet printing of polymeric, glass or metal surfaces comprising a solution of (a) an epoxy-phenolic binder resin (b) at least one soluble dye of the basic type or the chromium-complexed azo type and (c) a solvent blend which is characterized by consisting essentially of from 25 to 90% of an alcohol having 1 to 3 carbon atoms or a mixture of such alcohols, 5 to 20% of water, 0 to 20% of a lower alkylene glycol ether and an aliphatic ketone having 3 to 8 carbon atoms which is present in an amount up to 40%.

The invention is applicable to contactless printing of indicia on containers e.g. glass, bottles and

metal cans for food or beverages. Accordingly, the invention provides a glass or metal container having indicia printed thereon using an ink composition as defined in the last paragraph. Moreover, the invention is applicable too to contactless printing of indicia on polymer coated, insulated wire. Accordingly, the invention also provides a polymer coated wire having indicia printed thereon using an ink composition as defined in the last paragraph.

The invention will now be explained in more detail in the following description which is given by way of example only and not by way of limitation.

Jet ink compositions embodying the invention comprise at least one colourant, as defined, under (b) above, a binder resin and a solvent blend consisting of 25 to 40% of a lower aliphatic alcohol having 1 to 3 carbon atoms or a mixture of such alcohols, not more than 40% of an organic compound selected from the aliphatic ketones having 3 to 8 carbon atoms, not more than 20% of a lower alkylene glycol ether and 5 to 15% or 5 to 20% water. Other ingredients may be included optionally for special purposes. Such compositions are characterized by excellent fade-resistance, abrasion-resistance and resistance to weathering, and are especially suitable for forming identifying indicia on a variety of substrates including glass, ceramics, polymeric resins, polymer coated wire and coated and uncoated aluminium and steel e.g. from which food or beverage cans are fabricated.

The components of the jet ink compositions must be in carefully balanced proportion to achieve (1) successful operation of the ink in a contactless jet printing apparatus and (2) suitable properties for coating the particular substrate.

In general, suitability of the inks herein for the desired end use is measured in accordance with the following standards:

(1) Inks must dry instantly or be smear resistant upon application and dry completely in about 15 seconds without a post cure.

(2) Indicia printed on polymer coated wire must be abrasion-resistant to the extent that it remains legible at a minimum distance of 15 inches (38 cm) in minimum daylight (30 foot candles—322 Lux) after 20 rubs with an abrasive felt employing 2 lb. (0.9 kg) load at a speed of 30 to 60 rubs per minute.

(3) The printing must not damage polymer coating wire insulation. When immersed in a water solution containing 5% NaCl and a potential of 2000 volts rms. is applied for one minute between the conductor wire and an electrode in the solution, there must be no dielectric breakdown of the wire insulation, and the indicia must remain legible thereafter.

(4) An optional requirement, when such compositions are to be employed in certain specific aircraft is that the characters printed on polymer coated wire must withstand a 24 hour minimum soak in Skydrol, (which is a hydraulic fluid containing active tributyl phosphate, available commercially from Monsanto as Skydrol LD) at a temperature of 70°C and, after air drying at room temperature for 24 hours, the characters must remain legible thereafter.

(5) Characters printed on polymer coated wire must remain legible after a 24 hour minimum exposure, in a weatherometer, to alternating cycles of ultraviolet light and tap water spray. The cycle periods are about 102 minutes exposure to ultraviolet light followed by about 18 minutes exposure to both ultraviolet light and tap water spray.

(6) Indicia printed on glass must exhibit ready adhesion to the glass, be abrasion and fade resistant and have the capability of withstanding the conditions of moisture and elevated temperature normally encountered in pasteurization when the glass is designed for such use as beer bottles.

(7) Indicia printed on metal must exhibit ready adhesion to metal or synthetic polymeric coatings on such metal; they must also exhibit resistance to fading and capability of maintaining adhesion under typical brewery pasteurization conditions when immersed in solution for 15 minutes at 150°F (65.5°C).

The above characteristics are indeed stringent requirements for an ink composition which also has to possess suitable viscosity, electrical resistivity and surface tension properties, to render it operable in ink jet printing apparatus. The ink components according to this invention meet these requirements.

## Components of the Composition

*The Colourant*

The characteristics exhibited by the colourant are of prime consideration to achieve the stringent resistance properties discussed hereinabove. In general, suitable colourants are dyes characterized by sufficient solubility in the solvent mixture to give the desired colour intensity and compatibility with the other components of the composition. Neozapon Black RE (available commercially from BASF) is a particularly effective colourant for conveying light fastness (fade resistance) to the ink while Hecto Black R (also available from BASF) is most effective to convey Skydrol resistance for use in printing polymer coated wire. Mixtures of such colourants may also be used.

It is contemplated that functionally equivalent dyes other than Neozapon Black RE and Hecto Black R may also be employed. Neozapon Black RE is believed to be similar to Acid Black 63, Colour Index No. 21295 and Solvent Black 27.

Such dyes appear to be chromium-complexed azo type dyes. Satisfactory results have been obtained when employing Neozapon Red BE, Neozapon Red GE, Neozapon Fire Red G and Neozapon Blue FLE.

In addition to the colourants discussed above, other dyes may be substituted or utilized in combination therewith.

Suitable dyes include those of the basic type, for example of the C.I. Basic Blue, C.I. Basic Black and C.I. Basic Green types including methyl violet, ethyl violet, crystal blue, chrysoidine, Victoria Blue, rhodamine, auramine, etc. Mixtures of any of the illustrative dyes mentioned hereinabove may also be employed. Colourants may be incorporated in the compositions in amounts up to about 5% e.g. 1 to 5% by weight of the ink.

*The Resin Binder*

The resins suitable for use herein are classified as epoxy-phenolic resins and as especially epoxy ethers of bisphenols. Such resins are well known in the art and are generally derived from the alkaline catalyzed reaction of epichlorohydrin with said bisphenols. Such classic epoxy resins known in the art as DGEBA resins are believed to have the form of a polyglycidyl or diglycidyl ether of bisphenol A. The structure usually assigned to the product is:

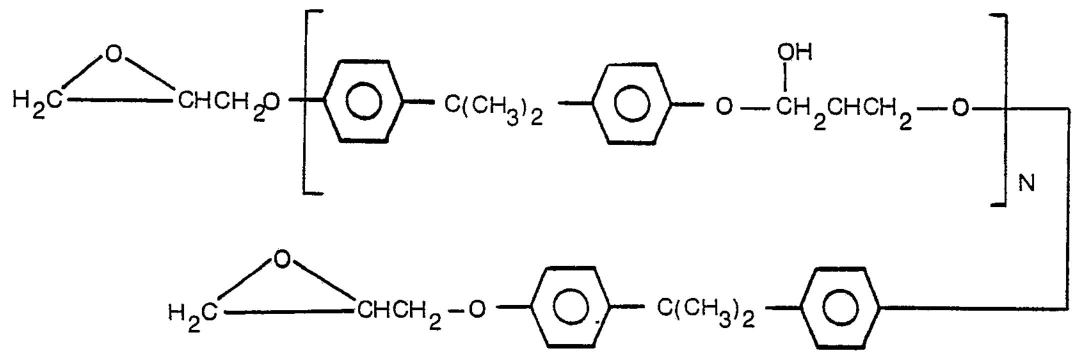

Suitable products vary from epoxy resins of the monomeric diglycidyl ether of bisphenol A (N=0) or similar materials wherein N=1, 2, 3 etc. Especially preferred are low molecular weight epoxy-phenolic resins having viscosities in the range of 0.1 to 0.5 Pas. The prime requirement of the resin is that it must exhibit suitable solubility and compatibility with the other ink components for incorporation in the ink compositions according to this invention and it must be of sufficiently low viscosity so that the viscosity of the ink is not increased above about 3.0 m Pas. Particularly preferred are such epoxy-phenolic resins available commercially under the registered trade mark Varcum from Reichhold Chemicals, Inc.

The resin component is critical since it is believed to convey the properties permitting the ink compositions to display the excellent printing and adhesion properties on a variety of substrates as aforementioned. The resin component preferably is in the range 4 to 20% by weight of the composition.

*The Solvent Blend*

Although minor amounts of other solvents may be included if desired, the primary solvent blend is a mixture of water with alcoholic, ketonic and glycol ether species. The blend is (a) 25 to 90% e.g. 25 to 40% of one or more lower aliphatic monohydric alcohols such as methanol, ethanol or propanol, or a mixture thereof (b) optionally, 0 to 20% of an organic compound selected from low molecular weight glycol ethers, including ethylene glycol monomethyl ether (commonly known as Methyl Cellosolve), ethylene glycol monoethyl ether (Cellosolve), propylene glycol monomethyl ether and propylene glycol monoethyl ethers; (c) 0 to 40% lower aliphatic ketones having 3 to 8 carbon atoms including methyl ethyl ketone, 2-heptanone, pentanone, 2-butanone, 2-hexanone and mixtures thereof and (d) 5 to 20% water. All percents are by weight of the blend unless otherwise specified.

The concentration of water in the composition is critical to the successful practice of the invention since too much water will cause precipitation of the epoxy-phenolic resin from the ink solution. Conversely, if a sufficient amount of water is not present, the viscosity of the ink will be too low and proper functioning of the composition in the ink jet printing apparatus will be impaired. In general, concentrations of 5% to 15% will be satisfactory.

The ketone content is preferably 20 to 40% or 25 to 40%.

Depending on substrate, the keton content can preferably be 32% or less, e.g. 25 to 32%.

Other optional components may be added to the composition to convey special characteristics.

A small amount of ammonia or similar alkalizing agent, in the form of concentrated aqueous solution may be added when necessary to maintain the system in a pH range of 7 to 8.5. When used, such ammonia water (26° Baumé) will be present in amounts of 0 to 0.2% by weight of the total ink composition.

Electrolytes are conventionally used in jet ink compositions to maintain the specific resistivity of the ink within desired limits. The ink compositions herein in most instances will have a specific resistivity within operable limits without the necessity of adding an electrolyte for this purpose. In

general however, optimum results may be obtained by addition of electrolytic components that are soluble in the ink medium and which have no deleterious effect on the printing apparatus or on the printed substrate. Satisfactory compounds for this use include dimethyl amine hydrochloride sodium propionate, sodium acetate, etc. with sodium propionate being especially preferred. In general, an effective amount of such electrolytic composition will be in the range of 0 to 0.1% of the composition.

The following examples are illustrative of ink compositions meeting the end-use requirements discussed hereinabove and which are effective in jet printing operations.

Example 1

The following ink composition was prepared from:

| | |
|---|---|
| 342 ml. | Methanol |
| 342 ml. | Methyl Ethyl Ketone |
| 127.3 g. | Varcum 29—108 epoxy-phenolic resin |
| 79 ml. | Isopropanol |
| 140 ml. | Distilled Water |
| 18.6 g. | Victoria Blue |
| 0.939 g. | Sodium Propionate |

The ink had a viscosity of 2.08 mPas at 74°F (23°C) and a resistivity of 1080 ohm-cm at 74°F (23°C).

The ink was printed on (1) wire samples coated with various polymers (2) glass and (3) coated and uncoated aluminium and steel using a jet ink printing operation.

The ink dried within 5 seconds. After drying the printed substrates were tested for adhesion and abrasion resistance by rubbing with an abrasive felt employing a 2 lb. (0.9 kg) load at a speed of 30 to 60 rubs per minute. The results were as indicated in the Table which follows:

TABLE

| Run No. | Substrate | Rub Resistance | Appearance |
|---|---|---|---|
| 1. | Nylon | Pass—Excellent | Excellent |
| 2. | Black High-Density Polyethylene | Pass | Good Printing Poor print contrast on black substrate. |
| 3. | Black Ethylene-Vinyl Acetate | Pass | Good printing Code difficult to see but visible on black surface. |
| 4. | Polyvinyl Chloride Grey, Yellow, Orange, White. | Excellent | Excellent; Prints well; visible. |
| 5. | White Silicone Rubber | Moderate | Excellent. |
| 6. | Black Polychloroprene | Moderate | Very difficult to see. |
| 7. | Glass | Pass | Excellent. |
| 8. | Metal | Pass | Excellent. |
| 9. | Metal | Pass | Excellent. |
| 10. | Polyimide | Pass | Excellent. |

Example 2

The following ink compositions were prepared from:

| | | |
|---|---|---|
| *Ink 2A:* | Methanol | 28.5% |
| | Methyl ethyl ketone | 29.0% |
| | Varcum 29—108 epoxy-phenolic resin | 13.4% |
| | Isopropyl alcohol | 6.5% |
| | Distilled Water | 10.5% |
| | Sodium propionate | 0.1% |
| | Ethyl Violet Dye | 2.0% |
| | Methyl Cellosolve | 9.8% |

The ink had the following properties at 24°C:

| | |
|---|---|
| Velocity of Sound: | 1323 meters/second |
| Resistivity: | 1200 ohm-cm. |
| Brookfield Viscosity: | 2.05 mPas |

| | | |
|---|---|---|
| *Ink 2B:* | Methanol | 31.65% |
| | Methyl ethyl ketone | 32.20% |
| | Varcum 29—108 epoxy phenolic resin | 14.89% |
| | Isopropyl alcohol | 7.29% |
| | Distilled Water | 11.68% |
| | Sodium propionate | 0.11% |
| | Victoria Blue FGA dye | 2.18% |

The ink had the following properties at 24°C:

| | |
|---|---|
| Velocity of sound: | 1319 meters/second |
| Resistivity: | 1200 ohm-cm. |
| Brookfield Viscosity | 2.10 mPas. |
| Surface tension: | 28 to 29 dyne-cm. ($28$ to $29 \times 10^{-3}$ Nm) |

The above inks were employed to print indicia on Kapton (registered trade mark) polyimide polymer coated wire by jet ink printing. After application, both inks dried within 5 seconds. After drying, the wire printed with each ink was tested and found to be abrasion-resistant to the extent that it remained legible at a minimum distance of 15 inches (38 cm) in minimum daylight after 20 rubs with an abrasive felt employing a 2 lb. (0.9 kg) load at a speed of 30 to 60 rubs per minute. When the printed wire was immersed in a water solution containing 5% NaCl and a potential of 2,000 volt rms. applied for one minute between the primary conducter and an electrode, there was no dielectric breakdown in the primary wire insulation and the indicia remained legible. Indicia printed on the polymer coated wire remained legible after a 24 hour exposure in a weatherometer to alternating cycles of UV light and tap water spray.

During more than 800 hours of operation of Ink 2—A in the jet printing units, evaporative losses from the ink supply system were compensated for by the addition, as needed of a makeup composition

containing about 1590 ml. methanol, 1893 ml. methyl ethyl ketone, 167 ml. isopropyl alcohol, 125 ml. distilled water and 11 ml. methyl cellosolve.

The above ink compositions were also employed to print indicia, by jet printing, on aluminium and steel beer cans as well as on glass bottles.

Example 3

The following ink compositions were prepared from:

| | | |
|---|---|---|
| *Ink 3A:* | Ethanol | 200 ml. |
| | Methyl Ethyl Ketone | 50 ml. |
| | Distilled Water | 25 ml. |
| | 26° Baumé ammonia | 1.5 ml. |
| | Varcum 29—108 | 12.7 g. |
| | Sodium propionate | 0.25 g. |
| | Victoria Blue | 2.0 g. |
| | Neozapon Black | 2.0 g. |
| *Ink 3B:* | Methanol | 89.5 ml. |
| | Methyl Ethyl Ketone | 89.5 ml. |
| | Varcum 29—108 | 34.1 g. |
| | Distilled Water | 17.9 ml. |
| | Isopropanol | 21.3 ml. |
| | Victoria Blue | 5.0 g. |
| | Sodium propionate | 0.25 g. |

The inks had the following properties:

| | Ink 3A | Ink 3B |
|---|---|---|
| Brookfield Viscosity: | 1.57 mPas | 1.72 mPas |
| Resistivity: | 1600 ohm-cm. | 1100 ohm-cm. |

The inks 3A and B were employed in a jet printing apparatus to print indicia on glass, Kapton polyimide and nylon/polyvinyl chloride surfaces.

The inks showed excellent adhesion, dried in less than 5 seconds and exhibited good printability. Resistance to moisture and ultraviolet radiation was excellent.

The above inks have been found to print on glass having condensed moisture on its surface with good adhesion.

It will be seen from the aforegoing description of the invention that jet ink compositions are provided that are characterized by extremely useful adhesion and resistance properties making them suitable for use in a variety of applications. As is evident from the examples, jet ink compositions of the invention are readily suitable for use in printing polymer coated wire of various types, in printing glass and/or ceramic surfaces and in printing the coated or uncoated metal surfaces of containers.

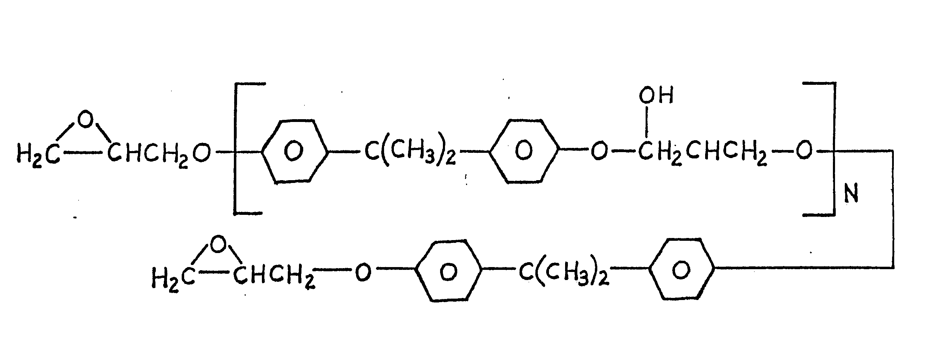

**Claims**

1. A contactless method of printing indicia on a substrate, characterized by the steps of:

(1) providing an ink composition comprising a solution of (a) an epoxy-phenolic binder resin (b) at least one soluble dye of the basic type or the chromium complexed azo type and (c) a solvent blend consisting essentially of 25 to 90% of an alcohol having 1 to 3 carbon atoms or a mixture of such alcohols, 5 to 20% water, an aliphatic ketone having 3 to 8 carbon atoms which is present in an

amount up to 40%, and 0 to 20% of a lower alkylene glycol ether,

(2) applying the said ink composition by means of a jet printing apparatus to a surface of a substrate selected from glass, ceramic, polymer coated wire and coated or uncoated aluminium or steel to form printed indicia thereon.

2. A method as claimed in claim 1, wherein the substrate is glass or ceramic and the ink composition comprises a solution of (a) 4 to 20% of an epoxy ether of bisphenol A having a viscosity within the range of 0.1 to 0.5 Pa.s; (b) 1 to 5% of a colourant dye and (c) a solvent mixture comprising 25 to 40% ethanol or methanol, 0 to 20% ethylene glycol monomethyl ether, 5 to 20% distilled water, 0 to 0.5% ammonium hydroxide and 20 to 40% methyl ethyl ketone.

3. A method as claimed in claim 1, wherein the said substrate is coated or uncoated aluminium or steel.

4. An ink composition suitable for use in contactless jet printing of polymeric, glass or metal surfaces comprising a solution of (a) an epoxy-phenolic binder resin (b) at least one soluble dye of the basic type or the chromium-complexed azo type and (c) a solvent blend which is characterized by consisting essentially of from 25 to 90% of an alcohol having 1 to 3 carbon atoms or a mixture of such alcohols, 5 to 20% of water, 0 to 20% of a lower alkylene glycol ether and an aliphatic ketone having 3 to 8 carbon atoms which is present in an amount up to 40%.

5. An ink composition as claimed in claim 4, wherein said composition is characterized by an amount of up to 0.1% of the composition of an electrolyte.

6. An ink composition as claimed in claim 4 or 5, characterized in that the said epoxy-phenolic binder resin is an epoxy ether of bisphenol A.

7. An ink composition as claimed in claim 4, 5 or 6, characterized in that the dye is a chromium-complexed azo dye selected from Neozapon Black and Hecto Black, or is a basic dye selected from methyl violet, ethyl violet, crystal violet and Victorian Blue.

8. An ink composition suitable as claimed in any of claims 4 to 7, for use in jet printing of polymer coated wires, characterized by comprising (a) 4 to 20% of an epoxy ether of bisphenol A having a viscosity within the range of 0.1 to 0.5 Pa.s; (b) 1 to 5% of the colourant dye and (c) a solvent mixture comprising 25 to 32% methanol, 4 to 8% isopropanol, 25 to 32% methyl ethyl ketone, 5 to 20% distilled water and 0.05 to 0.15% sodium propionate, the percentages being by weight of the composition.

9. An ink composition suitable according to any of claims 4 to 7 for use in jet printing of glass or ceramic surfaces, characterized by comprising a solution of (a) 4 to 20% of an epoxy ether of bisphenol A having a viscosity within the range of 0.1 to 0.5 Pa.s; (b) 1 to 5% of the colourant dye and (c) a solvent mixture comprising 25 to 40% ethanol or methanol, 0 to 20% ethylene glycol monomethyl ether, 5 to 20% distilled water, 0 to 0.5% ammonium hydroxide and up to 32% methyl ethyl ketone.

10. A glass or metal container having indicia printed thereon using an ink composition according to claim 4.

11. A polymer coated wire having indicia printed thereon using an ink composition according to claim 4.

**Revendications**

1. Un procédé d'impression sans contact d'inscriptions sur un substrat, caractérisé par les étapes:

1) de fourniture d'une composition d'encre comprenant une solution a) d'un liant résineux époxy-phénolique, b) d'au moins un colorant soluble du type basique ou du type azoïque complexé par le chrome et c) d'un mélange de solvants composé essentiellement de 25 à 90% d'un alcool possédant 1 à 3 atomes de carbone ou d'un mélange de ces alcools, de 5 à 90% d'un alcool possédant 1 à 3 atomes de carbone ou d'un mélange de ces alcools, de 5 à 20% d'eau, d'une cétone aliphatique possédant 3 à 8 atomes de carbone qui est présente en une quantité atteignant 40% et de 0 à 20% d'un éther d'alkylène glycol inférieur,

2) d'application de cette composition d'encre à l'aide d'un appareil d'impression au jet sur la surface d'un substrat choisi parmi le verre, la céramique, du fil revêtu de polymère, l'aluminium ou l'acier revêtu ou non revêtu pour y former des inscriptions imprimées.

2. Procédé selon la revendication 1, caractérisé en ce que le substrat est du verre ou de la céramique et que la composition d'encre comprend une solution a) de 4 à 20% d'un époxy éther de bisphénol A ayant une viscosité comprise entre 0,1 et 0,5 Pa.s; b) de 1 à 5% d'un colorant et c) d'un mélange de solvants composé de 25 à 40% d'éthanol ou de méthanol, de 0 à 20% d'éther monométhylique de l'éthylèneglycol, de 5 à 20% d'eau distillée, de 0 à 0.5% d'hydroxyde d'ammonium et de 20 à 40% de méthyléthylcétone.

3. Procédé selon la revendication 1, caractérisé en ce que ledit substrat est de l'aluminium ou de l'acier revêtu ou non revêtu.

4. Une composition d'encre utilisable pour l'impression au jet sans contact de surfaces de polymères, de verre ou de métal, comprenant une solution a) d'un liant résineaux époxyphénolique, b) d'au moins un colorant soluble de type basique ou de type azoïque complexé par le chrome et c) d'un mélange de solvants caractérisé par le fait qu'il se compose essentiellement de 25 à 90% d'un alcool

possédant 1 à 3 atomes de carbone ou d'un mélange de ces alcools, de 5 à 20% d'eau, de 0 à 20% d'un éther d'alkylène glycol inférieur et d'une cétone aliphatique possédant 3 à 8 atomes de carbone qui est présente en une quantité atteignant 40%.

5. Une composition d'encre selon la revendication 4, caractérisée en ce que ladite composition comprend un électrolyte en une quantité atteignant 0,1% de la composition.

6. Une composition d'encre selon la revendication 4 ou 5, caractérisée en ce que ledit liant résineux époxy-phénolique est un époxy-éther de bisphénol A.

7. Une composition d'encre selon la revendication 4, 5 ou 6, caractérisée en ce que le colorant est un colorant azoïque complexé par le chrome choisi parmi le Noir Neozapon et le Noir Hecto ou un colourant basique choisi parmi le violet de méthyle, le violet d'éthyle, le violet cristal et le bleu Victoria.

8. Une composition d'encre selon l'une quelconque des revendications 4 à 7 utilisable pour l'impression au jet de fils revêtus de polymère, caractérisée en ce qu'elle comprend a) 4 à 20% d'un époxy éther de bisphénol A ayant une viscosité comprise entre 0,1 et 0,5 Pa.s; b) 1 à 5% du colorant et c) un mélange de solvants composé de 25 à 32% de méthanol, de 4 à 8% d'isopropanol, de 25 à 32% de méthyléthylcétone, de 5 à 20% d'eau distillée et de 0,05 à 0,15% de propionate de sodium, les pourcentages s'entendant en poids de la composition.

9. Une composition d'encre selon l'une quelconque des revendications 4 à 7 utilisable pour l'impression au jet de surfaces de verre ou de céramique, caractérisée en ce qu'elle comprend un solution a) de 4 à 20 % d'un époxy éther de bisphénol A ayant une viscosité comprise entre 0,1 et 0,5 Pa.s; b) de 1 à 5% colorant et c) d'un mélange de solvants composé de 25 à 40% d'éthanol ou de méthanol, de 0 à 20% d'éther monométhylique de l'éthylèneglycol, de 5 à 20% d'eau distillée, de 0 à 0,5% d'hydroxyde d'ammonium et jusqu'à 32% de méthyléthylcétone.

10. Un récipient en verre ou en métal sur lequel sont imprimées des inscriptions à l'aide d'une composition d'encre selon la revendication 4.

11. Un fil revêtu de polymère sur lequel sont imprimées des inscriptions à l'aide d'une composition d'encre selon la revendication 4.

**Patentansprüche**

1. Kontaktloses Verfahren zum Drucken von Aufdrucken auf ein Substrat, gekennzeichnet durch die Verfahrensstufen:

(1) Bereitstellen einer Druckfarbenzusammensetzung, enthaltend eine Lösung von (a) einem Bindemittelharz vom Epoxy-Phenol-Typ, (b) mindestens einem löslichen Farbstoff des basischen Typs oder vom Chromkomplex-Azo-Typ und (c) ein Lösungsmittelgemisch, das im wesentlichen aus 25 bis 90% eines Alkohols mit 1 bis 3 Kohlenstoffatomen oder aus einem Gemisch solcher Alkohole, 5 bis 20% Wasser, bis zu 40% eines aliphatischen Ketons mit 3 bis 8 Kohlenstoffatomen und 0 bis 20% eines Niederalkylenglykoläthers besteht,

(2) Aufbringen der genannten Druckfarbenzusammensetzung mittels eines Spritz-Druckapparates auf eine Oberfläche eines Substrats aus der Gruppe Glas, Keramik, polymerbeschichteter Draht und beschichtetes oder unbeschichtetes Aluminium oder beschichteter oder unbeschichteter Stahl, wobei bedruckte Aufdrucke darauf gebildet werden.

2. Verfahren nach Anspruch 1, dadurch gekennzeichnet, daß das Substrat Glas oder Keramik ist und daß die Druckfarbenzusammensetzung eine Lösung von (a) 4 bis 20% eines Epoxidäthers von Bisphenol A mit einer Viskosität in einem Bereich von 0,1 bis 0,5 Pa.s; (b) 1 bis 5% eines färbenden Farbstoffs und (c) ein Lösungsmittelgemisch enthält, das 25 bis 40% Äthanol oder Methanol, 0 bis 20% Äthylenglykolmonomethyläther, 5 bis 20% destilliertes Wasser, 0 bis 0,5% Ammoniumhydroxid und 20 bis 40% Methyl-Äthyl-Keton enthält.

3. Verfahren nach Anspruch 1, dadurch gekennzeichnet, daß das Substrat beschichtetes oder unbeschichtetes Aluminium oder beschichteter oder unbeschichteter Stahl ist.

4. Zur Verwendung bei kontaktlosem Spritzdruckverfahren für polymere, Glas- oder Metalloberflächen geeignete Druckfarbenzusammensetzung, enthaltend eine Lösung von (a) einem Bindemittelharz vom Epoxy-Phenol-Typ, (b) mindestens einem löslichen Farbstoff des basischen Typs oder vom Chromkomplex-Azo-Typ und (c) ein Lösungsmittelgemisch, das dadurch gekennzeichnet ist, daß es im wesentlichen aus 25 bis 90% eines Alkohols mit 1 bis 3 Kohlenstoffatomen oder aus einem Gemisch solcher Alkohole, 5 bis 20% Wasser, 0 bis 20% eines Niederalkylenglykoläthers und bis zu 40% eines aliphatischen Ketons mit 3 bis 8 Kohlenstoffatomen besteht.

5. Druckfarbenzusammensetzung nach Anspruch 4, dadurch gekennzeichnet, daß sie bis zu 0,1% bezogen auf die Zusammensetzung, eines Elektrolyten enthält.

6. Druckfarbenzusammensetzung nach den Ansprüchen 4 oder 5, dadurch gekennzeichnet, daß das genannte Bindemittelharz vom Epoxy-Phenol-Typ einen Epoxidäther von Bisphenol A darstellt.

7. Druckfarbenzusammensetzung nach Anspruch 4, 5 oder 6, dadurch gekennzeichnet, daß der Farbstoff vom Chromkomplex-Azo-Typ aus der Gruppe Neozapon Schwarz (Neozapon Black) und Hecto Schwarz (Hecto Black) ist, oder einen basischen Farbstoff darstellt, aus der Gruppe Methylviolett, Athylviolett, Kristallviolett und Victoriablau.

8. Druckfarbenzusammensetzung gemäß den Ansprüchen 4 bis 7, zur Verwendung beim Spritzbedrucken von polymerbeschichteten Drähten, dadurch gekennzeichnet, daß sie die nachstehenden Bestandteile enthält: (a) 4 bis 20% eines Epoxidäthers von Bisphenol A mit einer Viskosität in einem Bereich von 0,1 bis 0,5 Pa.s; (b) 1 bis 5% des Farbstoffs und (c) eine Lösungsmittelgemisch, enthaltend 25 bis 32% Methanol, 4 bis 8% Isopropanol 25 bis 32% Methyläthylketon, 5 bis 20% destilliertes Wasser und 0,05 bis 0,15% Natriumpropionat, wobei sich die Prozentangaben auf das Gewicht der Zusammensetzung beziehen.

9. Druckfarbenzusammensetzung gemäß jedem der Patentansprüche 4 bis 7 zur Verwendung beim Spritzbedrucken von Glas- oder Keramik-Oberflächen, dadurch gekennzeichnet, daß sie die nachstehenden Bestandteile enthält: Eine Lösung von (a) 4 bis 20% eines Epoxidäthers von Bisphenol A mit einer Viskosität in einem Bereich von 0,1 bis 0,5 Pa.s; (b) 1 bis 5% des Farbstoffs und (c) ein Lösungsmittelgemisch, enthaltend 25 bis 40% Äthanol oder Methanol, 0 bis 20% Äthylenglykolmonomethyläther, 5 bis 20% destilliertes Wasser, 0 bis 0,5% Ammoniumhdyroxid und bis zu 32% Methyläthylketon.

10. Ein Glas- oder Metall-Behälter, der unter Verwendung einer Druckfarbenzusammensetzung nach Anspruch 4 mit Aufdrucken bedruckt wurde.

11. Ein polymerbeschichteter Draht, der unter Verwendung einer Druckfarbenzusammensetzung nach Anspruch 4 mit Aufdrucken bedruckt wurde.